# EUROPÄISCHE PATENTSCHRIFT

(11) **EP 0 760 584 B1**
(45) Veröffentlichungstag und Bekanntmachung des Hinweises auf die Patenterteilung: **17.04.2002**
(21) Anmeldenummer: 96113505.0
(22) Anmeldetag: 22.08.1996
(51) Int. Cl.: H04N 13/00, H04H 1/02, H04N 7/10, H04N 7/173

(54) **Elektrische Übertragungssystem, mit einem Breitbandverteilnetz für TV- und Audio-Signale, und mit einer Möglichkeit für interaktive Dienste**
Electrical transmission system with a wide-band distribution system for TV and audio signals and with a possibility for interactive services
Système de transmission électrique avec un réseau de distribution à large bande pour signaux TV et audio et avec une possibilité pour des services interactifs

(30) Priorität: 24.08.1995 DE 19531118
(43) Veröffentlichungstag der Anmeldung: 05.03.1997
(73) Patentinhaber: ALCATEL, 75008 Paris (FR)
(72) Erfinder: Heidemann, Rolf, Dr., 71732 Tamm (DE); Krimmel, Heinz G., 70825 Korntal-Münchingen (DE)
(74) Vertreter: Schätzle, Albin, Dipl.-Phys.

(56) Entgegenhaltungen:
- US-A- 5 408 260
- GELMAN A D ET AL: "AN ARCHITECTURE FOR INTERACTIVE APPLICATIONS" PROCEEDINGS OF THE INTERNATIONAL CONFERENCE ON COMMUNICATIONS (ICC), GENEVA, MAY 23 - 26, 1993, Bd. 2, 23. Mai 1993, Seiten 848-852, XP000371202 INSTITUTE OF ELECTRICAL AND ELECTRONICS ENGINEERS

## Beschreibung

Die Erfindung betrifft ein Übertragungssystem gemäß dem Oberbegriff des Anspruchs 1 und eine Rückkanaleinrichtung für ein solches Übertragungssystem. Die Rückkanaleinrichtung ist Gegenstand des Anspruchs 5.

Ein solches Übertragungssystem ist z. B. ein Breitbandverteilnetz, das aus H. Hessenmüller et al, "Zugangsnetzstrukturen für interaktive Videodienste", Teil 1, Der Fernmeldeingenieur, 48. Jahrgang, August 1994, bekannt ist. Darin sind in einer Übersicht Breitbandverteilnetze beschrieben, die auch als BK-Netze bezeichnet werden, und die in der Netzebene 3 festgelegte A-Kabellinien, B-Kabellinien, C-Kabellinien und D-Kabellinien haben (Bild 3). Die C-Kabellinien enthalten die letzten aktiven Elemente der Netzebene 3, die C-Verstärker. Im BK-Netz sind dies die teilnehmernächsten Verstärker des Netzbetreibers. Die D-Kabellinien, die Anschlußnetzabschnitte darstellen, beginnen an den Abzweigern der C-Kabellinien und enden jeweils an einem Übergabepunkt. In einer übergeordneten BK-Verstärkerstelle werden alle Fernseh- und Rundfunkprogramme zu einem einheitlichen Programmangebot zusammengefaßt und an die benutzerseitigen BK-Verstärkerstellen verteilt, die sich üblicherweise in Ortsvermittlungsstellen befinden. Von den BK-Verstärkerstellen aus, werden die Fernseh- und Rundfunkprogramme in Abwärtsrichtung zu den Teilnehmern (Kunden) verteilt.

Um in solchen BK-Netzen neben den unidirektionalen Diensten in Abwärtsrichtung (Fernseh- und Rundfunksignale) auch die Möglichkeit für interaktive Dienste, d. h. sogenannte Service-on-Demand (SoD) Dienste wie z. B. Video-on-Demand (VoD), zu schaffen, ist in jedem BK-Netz ein (physischer) Rückkanal für eine Signalübertragung in Aufwärtsrichtung vorzusehen. Dadurch können Teilnehmer der SoD-Vermittlungsstelle und einem Servernetz Nutzdaten senden, um z. B. Information anzufordern. Für eine Interaktion zwischen dem Diensteanbieter und einem Teilnehmer wird ein Rückkanal und ein Steuerkanal benötigt. Der Rückkanal unterstützt dabei u. a. die Identifikation des Kunden, den Verbindungsauf- und -abbau und die Interaktion des Kunden mit der SoD-Vermittlungsstelle und des Servers. Für die Dauer der Nutzung des Dienstes hat jeder Kunde einen individuellen Rückkanal zur Verfügung. Bei derzeitigen BK-Netzen ist für die Rückkanäle ein Frequenzbereich von ca. 5 - 30 MHz und für die Fernsehkanäle ein Frequenzbereich von ca. 40 - 300 MHz (450 MHz, Hyperband) festgelegt. Eine Anforderung an den Rückkanal ist z. B., daß die Reaktionszeit bis zum Wirken eines --über ein Endgerät (Fernsehgerät mit einer Set-Top-Box) eingegebenen Befehls in vertretbaren Grenzen bleibt.

In Kapitel 3.4 der genannten Veröffentlichung werden Lösungen für den Rückkanal untersucht, mit dem Ergebnis, daß Zugriffs- bzw. Übertragungsverfahren für den Rückkanal in großen Netzen mehrstufig zu gestalten sind und die Zentrale für den Fall der zentralen Zugriffssteuerung in Richtung zum Kunden zu verlagern ist. In Bild 12 ist dafür ein zweistufiges Rückkanalkonzept gezeigt. Ausgehend von der allgemeinen Struktur eines BK-Netzes, ist bei einem C-Verstärker ein Rückkanalsender mit einer Zugriffssteuerung angeordnet. Als Übermittlungsverfahren ist ATM genannt. Die Rückkanaldaten aller Endgeräte des betreffenden Netzsegments werden im Zeitmultiplexverfahren zusammengefaßt, zellstrukturiert und mit einer knotenindividuellen Adresse versehen. An Knotenpunkten des Netzes mit Verzweigungsfunktion in Abwärtsrichtung befinden sich Zellmultiplexer.

Für den Rückkanal wird somit bis zur benutzerseitigen Verstärkerstelle das auf Koaxialkabel beruhende BK-Netz verwendet. Damit dies möglich ist, muß das BK-Netz "rückkanalfähig" sein, d. h. alle im BK-Netz vorhandenen Verstärker müssen sich in Aufwärtsrichtung ausbreitende Signale (Aufwärtssignale) durchlassen oder regenerieren. Dies geschieht dadurch, daß die Aufwärtssignale im Rückkanal an jedem einzelnen Verstärker mit Hilfe von Weichen vorbeigeführt werden oder zusammen aktiv verstärkt werden. Bestehende BK-Netze "rückkanalfähig" zu machen, ist demnach mit einem hohen Aufwand verbunden. Hinzukommt, daß durch jede Weiche auch die Abwärtssignale gedämpft werden.

Der Erfindung liegt deshalb die Aufgabe zugrunde, ein kostengünstiges Übertragungssystem anzugeben, bei dem Fernseh- und Rundfunksignale über ein Breitbandverteilnetz verteilt werden, und bei dem eine Möglichkeit für interaktive Dienste besteht. Ein die Aufgabe lösendes Übertragungssystem ist Gegenstand des Anspruchs 1. Ein zentrales Element des erfindungsgemäßen Übertragungssystems ist eine Rückkanaleinrichtung. Eine solche Rückkanaleinrichtung ist Gegenstand des Anspruchs 5. Vorteilhafte Ausgestaltungen der Erfindung sind in den Unteransprüchen angegeben.

Ein Vorteil der Erfindung ist, daß bestehende BK-Netze nur sehr geringfügig geändert werden müssen, nämlich z. B. nur an den C-Verstärkern und in der Zentrale.

Ein weiterer Vorteil der Erfindung ist, daß sowohl in Aufwärts- als auch in Abwärtsrichtung neue und eventuell erweiterte Frequenzbereiche der passiven C- und D-Kabellinien genutzt werden können, um so ein erweitertes Diensteangebot zur Verfügung zu stellen, und zwar ohne die Verstärker anpassen oder austauschen zu müssen.

Die Erfindung wird im folgenden beispielhaft anhand von Zeichnungen näher erläutert. Es zeigen:
- Fig. 1: schematisch ein erstes Ausführungsbeispiel eines Übertragungssystems mit einer Rückkanaleinrichtung,
- Fig. 2: ein Blockschaltbild der Rückkanaleinrichtung, und
- Fig. 3: ein zweites Ausführungsbeispiel des Übertragungssystems.

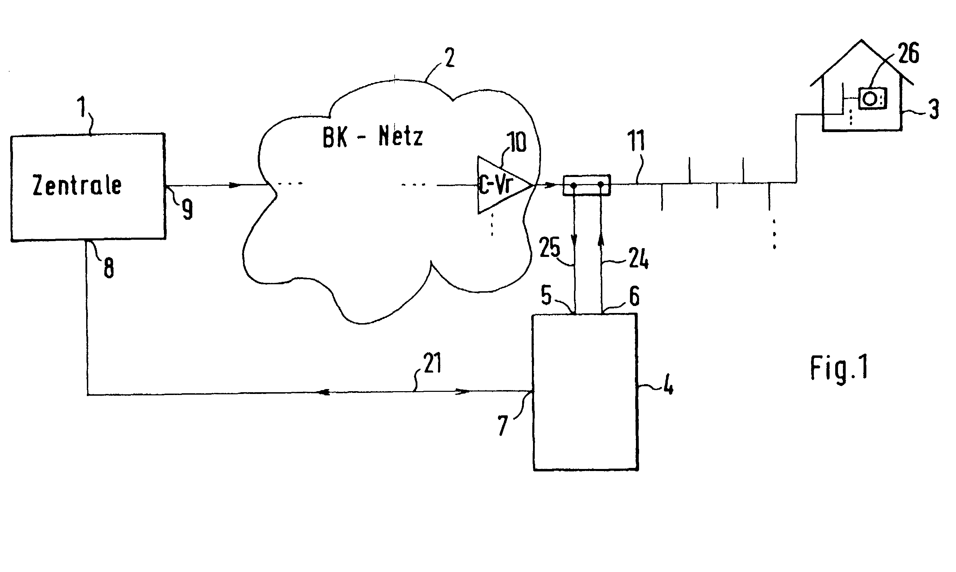

In Fig. 1 ist ein erstes Ausführungsbeispiel eines Übertragungssystems gezeigt, das z. B. ein elektrisches Übertragungssystem ist, bei dem an ein Breitbandverteilnetz 2, im folgenden als BK-Netz bezeichnet, eine Zentrale 1 und eine Vielzahl von Teilnehmerendgeräten 26, nachstehend Endgeräte genannt, angeschlossen sind. Das auf Koaxialkabel basierende BK-Netz 2 ist hinreichend bekannt, so daß es nur schematisch angedeutet und nur ein Verstärker 10, der auch als C-Verstärker bezeichnet wird, eingezeichnet ist. An diesen teilnehmernahen Verstärker 10 ist über einen passiven Anschlußnetzabschnitt 11, auch als C-/D-Ebene bezeichnet, eine Gruppe von Endgeräten 26 angeschlossen; in Fig. 1 ist dies durch eines von vielen Gebäuden 3 angedeutet, in denen sich ein oder mehrere Endgeräte 26 befinden. In der nachstehenden Beschreibung wird auf ein in jedem Gebäude 3 vorhandenes Hausverteilnetz nicht explizit eingegangen. Die Endgeräte 26 sind z. B. Fernsehgeräte mit einer damit verbundenen für interaktive Dienste ausgelegte Zusatzeinrichtung, Set-Top-Box genannt, über die Teilnehmer einen Dienst anfordern und steuern können. Set-Top-Boxen sind z. B. aus dem Artikel "Standard für Set-Top-Boxen", Funkschau, Nr. 17/95, Seiten 42 bis 44, bekannt, in dem eine Übersicht über die Funktionalität von Set-Top-Boxen angegeben ist.

Bei dem elektrischen Übertragungssystem sendet die Zentrale 1 den üblichen Normen entsprechende Fernseh- und Rundfunksignale zu den Teilnehmerendgeräten 26. Zusätzlich zu diesen Fernseh- und Rundfunksignalen können aber auch andere Signale (z. B. Datensignale) von der Zentrale 1 ausgesendet werden, die ebenfalls über das BK-Netz verteilt werden. Zusätzlich kann die Zentrale 1 teilnehmerindividuelle Signale aussenden, um so den Teilnehmern auf Anfrage z. B. Spielfilme oder Audioprogramme anzubieten (z. B. Video-on-Demand). In der Zentrale 1 ist dafür ein Netz von Video-Servern vorhanden.

An den passiven Anschlußnetzabschnitt 11 ist eine Rückkanaleinrichtung 4 angeschlossen, die Anschlüsse 5, 6 für mit dem Anschlußnetzabschnitt 11 verbundene Leitungen 24, 25 hat. Die Rückkanaleinrichtung 4 hat außerdem einen weiteren Anschluß 7, an den eine Zweidrahtleitung 21 angeschlossen ist, die dadurch die Rückkanaleinrichtung 4 mit einem Anschluß 8 der Zentrale 1 mittelbar verbindet. Mittelbar bedeutet hier, daß die Rückkanaleinrichtung 4 direkt an die Zweidrahtleitung 21 angeschlossen ist, die Zweidrahtleitung 21 kann aber mit ihren anderen Ende an ein anderes Übertragungsmedium angeschlossen sein, z. B. an einen Lichtwellenleiter, um so die Verbindung mit der Zentrale 1 herzustellen. In diesem Fall werden die Aufwärtssignale zuerst elektrisch über die Zweidrahtleitung 21 übertragen, in einer Schnittstelle zwischen der Zweidrahtleitung 21 und dem Lichtwellenleiter elektrooptisch gewandelt und daran anschließend optisch bis zur Zentrale 1 übertragen. Die Zweidrahtleitung 21 ist eine Kupferdoppelader, wie sie üblicherweise für das Fernsprechnetz verwendet wird.

Vorzugsweise ist die Rückkanaleinrichtung 4 zusammen mit dem Verstärker 10, dem C-Verstärker, an einem gemeinsamen Ort (bekannt als C-Verstärkerpunkt) angeordnet, und zwar so, daß die Leitungen 24, 25, in Aufwärtsrichtung betrachtet, vor dem Verstärker 10 an den passiven Anschlußnetzabschnitt 11 angeschlossen sind. Prinzipiell kann die Rückkanaleinrichtung 4 aber entlang des passiven Anschlußnetzabschnitts 11 an einem beliebigen Ort angeordnet sein. Der Anschluß der Leitungen 24, 25 an den passiven Anschlußnetzabschnitt 11 erfolgt z. B. durch Frequenzweichen und Addierer, oder allgemein durch einen Duplexer. Obwohl in dem in Fig. 1 gezeigten BK-Netz 2 nur ein Verstärker 10 und eine Rückkanaleinrichtung 4 eingezeichnet ist, ist es selbstverständlich, daß bei jedem Verstärker 10 eine Rückkanaleinrichtung 4 vorhanden sein kann.

Wollen mehrere Teilnehmer der Gruppe gleichzeitig einen der Dienste in Anspruch nehmen, d. h. mehrere Endgeräte 26 wollen denselben Rückkanal benutzten, muß die Zentrale 1 die Herkunft eines jeden Aufwärtssignals, also einer jeden Anforderung erkennen. Deshalb sind von den Endgeräten 26 kommende Anforderungen in Pakete (oder Blöcke) aufgeteilt, und jedem der Pakete ist eine Absenderangabe, z. B. eine Endgerätekennung, hinzugefügt. Jedes Paket besteht aus einem Kopfteil (Header) mit den Adressangaben und einem Teil für Nutzinformation (Payload). Für die Kommunikation zwischen den Endgeräten 26 und der Rückkanaleinrichtung 4 kommt z. B. das bekannte Aloha Protokoll oder das "slotted"-Aloha Protokoll zur Anwendung. Es ist aber auch möglich, andere bekannte Protokolle zu verwenden. Die Pakete werden im TDMA-Verfahren übertragen.

Da die Endgeräte die Anforderungen im einfachsten Fall unabhängig voneinander aussenden (Aloha Protokoll), ist es eine Aufgabe der erfindungsgemäßen Rückkanaleinrichtung 4, diese unkoordiniert ausgesendeten Anforderungen bereits in der C-Ebene dahingehend zu überprüfen, ob die einzelnen Pakete ungestört und ohne gegenseitige Überlappungen (Kollisionen) von der Rückkanaleinrichtung 4 empfangen werden. Stellt die Rückkanaleinrichtung 4 fest, daß ein oder mehrere Pakete nicht einwandfrei empfangen wurden, kann die Rückkanaleinrichtung 4 die betroffenen Endgeräte 26 so oft wie erforderlich auffordern, diese Pakete zu wiederholen. Nur einwandfrei empfangene Pakete werden von der Rückkanaleinrichtung 4 über die Zweidrahtleitung 21 zur Zentrale 1 gesendet. Die Rückkanaleinrichtung 4 kann zudem so ausgelegt sein, daß prinzipiell jedes einwandfrei empfangene Paket quittiert wird.

Aus dem vorhergehenden ist ersichtlich, daß zwischen den Endgeräten 26 und der Rückkanaleinrichtung 4 eine "Kommunikation" gemäß einem festgelegten Protokoll erfolgt. Damit hat die Rückkanaleinrichtung 4 u. a. eine der Zentrale 1 vorgeschaltete teilnehmernahe Regenerator- und Filterfunktion, so daß die Zentrale 1 ausschließlich einwandfreie Pakete empfängt. In der Zentrale 1 ist dadurch keine Protokollabwicklung wie oben beschrieben notwendig; die Zentrale 1 ist somit nicht für eine Detektion von eventuell auftretenden Kollisionen zuständig. Dies hat den Vorteil, daß Wartezeiten der Teilnehmer, bis sie Reaktionen auf ihre Anforderungen erhalten, reduziert werden. Dadurch, daß die Rückkanaleinrichtung 4 sehr nahe (typischerweise < 300 m) bei den Endgeräten 26 angeordnet ist, spielen Laufzeiten im passiven Anschlußnetzabschnitt 11 keine Rolle, und es ist ein hoher Datendurchsatz gewährleistet. Die sich in der Zweidrahtleitung 21 ausbreitenden Aufwärtssignale, die sich kollisionsfrei ausbreiten, können eine niedrigere Übertragungsgeschwindigkeit, bei gleichem Datendurchsatz haben.

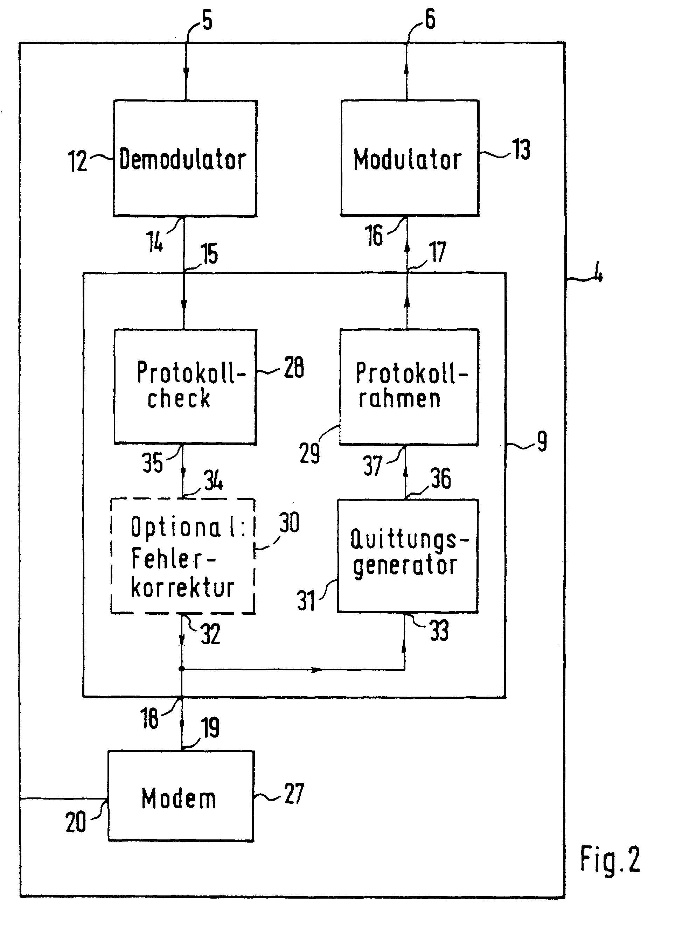

Im folgenden wird der Aufbau der Rückkanaleinrichtung 4 anhand des in Fig. 2 gezeigten Blockschaltbildes erläutert. In der Rückkanaleinrichtung 4 ist eine Empfangseinrichtung 12, eine Sendeeinrichtung 13, ein Regenerator 9 und eine Modulations- und Demodulationseinrichtung 27 vorhanden.

Die genannten Einrichtungen 12, 13, 27 und der Regenerator 9 sind wie folgt miteinander verbunden: Die Empfangseinrichtung 12 ist mit dem Anschluß 5 der Rückkanaleinrichtung 4 verbunden und empfängt die von den einzelnen Endgeräten 26 ausgesendeten Aufwärtssignale, die einem Unterträger aufmoduliert sind. Ein Ausgang 14 der Empfangseinrichtung 12 ist mit einem Eingang 15 des Regenerators 9 verbunden, dem dadurch die (demodulierten) Aufwärtssignale zugeführt werden können. Ein Ausgang 17 des Regenerators 9 ist mit einem Eingang 16 der Sendeeinrichtung 13 verbunden, die mit dem Anschluß 6 der Rückkanaleinrichtung 4 verbunden ist. Ein Ausgang 18 des Regenerators 9 ist mit einem Eingang 19 der Modulations- und Demodulationseinrichtung 27 verbunden, die einen mit dem Anschluß 7 verbundenen Ein- und Ausgang 20 hat. Der Regenerator 9 empfängt die im TDMA-Verfahren übertragenen Aufwärtssignale von der Empfangseinrichtung 12 und sendet Signale zur Sendeeinrichtung 13 im TDM-Verfahren.

Die Aufwärtssignale, die einem der Gruppe von Endgeräten gemeinsamen Unterträger (Hilfträger) im Frequenzband von z. B. 5 - 30 MHz aufmoduliert sind, werden durch die Empfangseinrichtung 12 demoduliert, so daß die Aufwärtssignale, nach der Demodulation im Basisband vorliegen, z. B. als NRZ-Signale. Die Empfangseinrichtung 12 hat demnach im wesentlichen die Funktion eines Demodulators.

Die demodulierten Aufwärtssignale werden einer im Regenerator 9 vorhandenen Kontrolleinrichtung 28 zugeführt, die das für die Kommunikation verwendete Protokoll kontrolliert; in Fig. 2 ist zur Verdeutlichung die Funktion der Kontrolleinrichtung 28 als Protokoll-Check bezeichnet und eingezeichnet. Die Kontrolleinrichtung 28 kontrolliert, ob die von den Endgeräten 26 als Pakete gesendeten Aufwärtssignale ungestört empfangen werden, d. h., ob es zu Kollisionen der Pakete kommt oder ob Fehler innerhalb der Pakete auftreten. Da die Kontrolleinrichtung 28 nur ungestörte Pakete durchläßt, hat sie u. a., wie bereits erwähnt, eine Filterfunktion.

Ein Ausgang 35 der Kontrolleinrichtung 28 ist mit einem Eingang 34 einer Korrektureinrichtung 30 verbunden, die einen Ausgang 32 hat, der mit dem Ausgang 18 des Regenerators 9 und einem Eingang 33 eines Quittungsgenerators 31 verbunden ist. Diese Korrektureinrichtung 30 ist nicht immer erforderlich; aus diesem Grund ist sie in Fig. 2 gestrichelt eingezeichnet. Nicht erforderlich ist sie, wenn bei der Übertragung der Aufwärtssignale geringfügige Einzelfehler akzeptiert werden, das elektrische Übertragungssystem für eine gewisse Fehlertoleranz-ausgelegt ist und an einer anderer Stelle des elektrischen Übertragungssystems die Einzelfehler erkannt und/oder korrigiert werden können. Dann, wenn keine Korrektureinrichtung 30 erforderlich ist, ist der Ausgang 35 der Kontrolleinrichtung 28 direkt mit dem Ausgang 18 des Regenerators 9 und dem Eingang 31 des Quittungsgenerators 31 verbunden.

Der Quittungsgenerator 31 erzeugt in Abhängigkeit von den von der Kontrolleinrichtung 28 überprüften Paketen Quittungssignale, die zu den Endgeräten 26 gesendet werden. Je nach dem, welches Protokoll ausgeführt wird, kann ein Quittungssignal bedeuten, daß Pakete kollidiert sind und deshalb neu gesendet werden müssen, oder daß die Pakete ungestört empfangen wurden. Die erzeugten Quittungssignale treten an einem Ausgang 36 aus dem Quittungsgenerator 31 aus und an einem Eingang 37 in eine Rahmeneinrichtung 29 ein.

Die Rahmeneinrichtung 29 bereitet die empfangenen Quittungssignale und eventuell von der Zentrale 1 über die Zweidrahtleitung 21 gesendete Betriebs- und Nutzinformationssignale derart auf, daß diese in Rahmen gesetzt werden, die dem angewendeten Protokoll entsprechen, und zum Ausgang 17 des Regenerators 9 übertragen und anschließend zur Sendeeinrichtung 13 gesendet werden.

Die Sendeeinrichtung 13 ist ein Modulator, der einen Unterträger durch die Quittungsssignale und durch die Betriebs- und Nutzinformationssignale moduliert. Dadurch werden diese Signale, die z. B. als NRZ-Signale vorliegen in HF-Signale gewandelt. Durch die Wahl des Unterträgers kann z. B. im Frequenzband von 40 - 450/600 MHz ein Kanal belegt werden.

Die Sendeeinrichtung 13 und die Empfangseinrichtung 12 können auch mehrfach vorhanden sein, so daß für jeden weiteren möglichen Dienst jeweils eine weitere Einrichtung vorhanden ist.

Die Modulations- und Demodulationseinrichtung 27, im folgenden Modem genannt, hat u. a. die Aufgabe, die Aufwärtssignale für die Übertragung über die Zweidrahtleitung 21 aufzubereiten. Zu einer solchen Aufbereitung gehört z. B., daß die Aufwärtssignale mit einem Fehlerschutz versehen werden, um so eine gesicherte Übertragung zu gewährleisten. Modems, die an eine Zweidrahtleitung anschließbar sind und deren technischen Details (z. B. Bitfolgefrequenz (64 kbit/s ISDN Übertragung im Basisband) und Schnittstellenprotokoll (V.34)), sind hinreichend bekannt (s. z. B. "V.34-Modems mit Tücken" und "V.34-Modems: Tips & Tricks", Funkschau, Nr. 16/95, Seiten 54 bis 58).

Bei dem in Fig. 1 gezeigten elektrischen Übertragungssystem erfolgt somit die Protokollabwicklung für den Mehrfachzugriff ausschließlich auf der C-/D-Ebene. Es wird ein leistungsfähiges Unterträgermodulationsverfahren in der C-/D-Ebene angewendet. Dies hat zudem den Vorteil, daß verschiedene Modulationsverfahren und Protokolle nebeneinander verwendet werden können.

Bei dem vorstehend beschriebenen elektrischen Übertragungssystem ist es möglich, bei Bedarf einige Modifikationen vorzunehmen, die im folgenden beschrieben werden. Auch wenn diese Modifikationen vorgenommen werden, wird das der Erfindung zu Grunde liegende Konzept beibehalten.

In der ersten Modifikation kann an Stelle des Modems ein Netzabschluß für die ADSL-Technik eingesetzt werden, die z. B. aus H.-W. Wellhausen, "Effiziente Nutzung vorhandener Kupfer-Ortsanschlußleitungsnetze", Der Fernmeldeingenieur, 47. Jahrgang, August/September 1993, vor allem Kapitel 3.5, Seiten 31 - 34, bekannt ist. Daraus ist bekannt, daß es bei der ADSL-Technik eine Übertragung mit einer hohen Bitfolgefrequenz in Richtung zum Teilnehmer (Abwärtssignale) und eine Übertragung mit einer niedrigen Bitfolgefrequenz vom Teilnehmer zur Zentrale (Aufwärtssignale) gibt. Für die Übertragung zum Teilnehmer kommen Bitfolgefrequenzen zwischen 1,544 und 6 Mbit/s in Betracht. Für die Übertragung von Steuerinformation vom Teilnehmer zur Zentrale kommen dagegen Bitfolgefrequenzen von einigen 10 kbit/s in Betracht.

Bei der ADSL-Technik ist auch ein Fehlerschutz implementiert, der Fehler im empfangenen Signal erkennt und teilweise wieder korrigieren kann. Dazu wird z. B. ein Reed-Solomon-Code verwendet. Mit diesem wird ein zu sendender Bitstrom codiert, bevor die Bits auf die einzelnen Unterträger verteilt werden. Optional kann noch zusätzlich für jeden der Unterkanäle eine Trellis-Codierung implementiert werden, die eine zusätzliche Störsicherheit gewährleistet.

Bei dem erfindungsgemäßen elektrischen Übertragungssystem wird die bekannte ADSL-Technik "umgekehrt" eingesetzt, d. h. die Übertragung der Aufwärtssignale zur Zentrale erfolgt mit der hohen Bitfolgefrequenz, wodurch neue Telekommunikationsdienste möglich sind.

In der zweiten Modifikation kann ebenfalls an Stelle des Modems ein Netzabschluß für die HDSL-Technik eingesetzt werden, die ebenfalls aus der in Zusammenhang mit der ADSL-Technik genannten Veröffentlichtung bekannt ist. Bei der HDSL-Technik handelt es sich um eine bidirektionale Übertragung von Signalen gleicher Bitfolgefrequenz, z. B. 2 Mbit/s. Der Netzabschluß für die HDSL-Technik hat dabei neben der Verbindung zum Ausgang 18 des Regenerators 9, an dem die Aufwärtssignale empfangen werden, zusätzlich eine Verbindung zur Sendeeinrichtung 13, um so die von der Zentrale gesendeten Signale der oder einer von mehreren Sendeeinrichtungen 13 direkt unter Umgehung des Regenerators 9 zuzuführen.

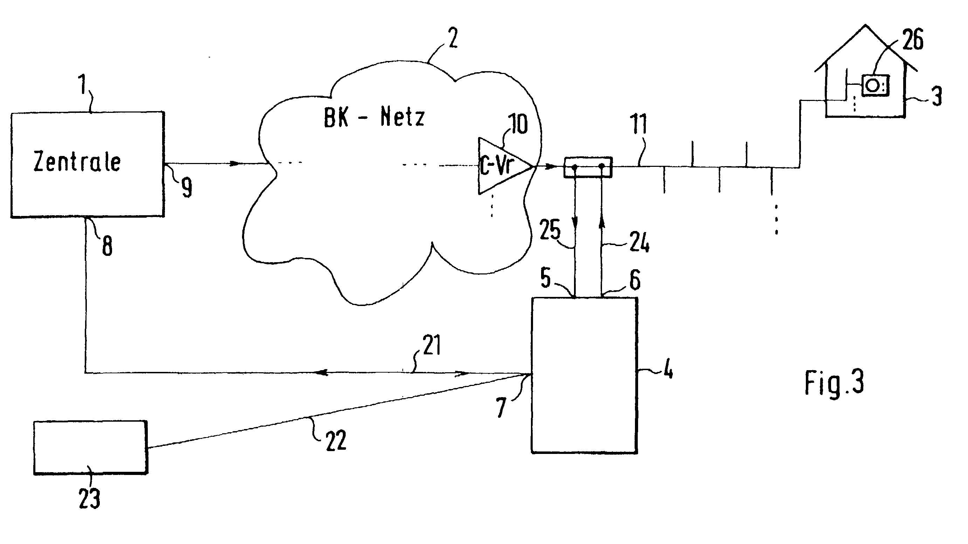

In Fig 3 ist ein zweites Ausführungsbeispiel eines elektrischen Übertragungssystems gezeigt, das eine Modifikation des in Fig. 1 gezeigten elektrischen Übertragungssystems ist. Bereits in Fig. 1 gezeigte Bestandteile des elektrischen Übertragungssystems haben in Fig. 3 die gleichen Bezugszeichen. Im folgenden wird nur auf durch die Modifikation bedingte Änderungen des elektrischen Übertragungssystems eingegangen. Eine solche Änderung ist, daß an den Anschluß 7 der Rückkanaleinrichtung 4 eine Zweidrahtleitung 22 angeschlossen ist, die eine Verbindung zu einer Vermittlungseinrichtung 23 herstellt. Diese Vermittlungseinrichtung 23 ist Teil eines vom BK-Netz 2 unabhängigen Netzes. Eine weitere Änderung ist, daß in der Rückkanaleinrichtung 4 der bereits erwähnte Netzabschluß für HDSL-Signale vorhanden ist.

Über beide Zweidrahtleitungen 21, 22 ist dadurch eine bidirektionale Übertragung von Signalen möglich; die Bitfolgefrequenz der Signale beträgt z. B. 2 Mbit/s. Die Möglichkeit zur bidirektionalen Übertragung der Signale besteht bis zu den Endgeräten 26. Das BK-Netz 2 ist dabei in darüberliegenden Netzabschnitten unverändert nur für unidirektionale Übertragung, nämlich von der Zentrale 1 zu den Endgeräten 26, geeignet und ausgebaut.

## Patentansprüche

1. Übertragungssystem, bei dem an ein Breitbandverteilnetz (2) eine Zentrale (1) und eine Vielzahl von Teilnehmerendgeräten (26) angeschlossen sind, die von der Zentrale (1) ausgesendete Fernsehund Rundfunksignale, oder andere zu verteilende Signale, und teilnehmerindividuelle Signale empfangen können, und die Aufwärtssignale zur Zentrale (1) senden können, und bei dem das Breitbandverteilnetz (2) eine Vielzahl von teilnehmernahen Verstärkern (10) hat, an die jeweils durch einen Anschlußnetzabschnitt (11) eine Gruppe von Teilnehmerendgeräten (26) angeschlossen ist,
**dadurch gekennzeichnet , daß** mit mindestens einem teilnehmernahen Verstärker (10) oder mindestens einem Anschlußnetzabschnitt (11) jeweils eine Rückkanaleinrichtung (4) verbunden ist, die an eine Zweidrahtleitung (21) angeschlossen ist, die direkt oder indirekt mit der Zentrale (1) verbunden ist, daß die Rückkanaleinrichtung (4) die von den Teilnehmerendgeräten (26) gesendeten Aufwärtssignale empfängt, und daß die Rückkanaleinrichtung (4) die empfangenen Aufwärtssignale gemäß einem Protokoll, das einen Mehrfachzugriff der Teilnehmerendgeräte (26) auf die Zweidrahtleitung (21) regelt, zur Zentrale (1) sendet.

2. Übertragungssystem nach Anspruch 1, **dadurch gekennzeichnet, daß** in der Rückkanaleinrichtung (4) ein Regenerator (9), eine mit dem Regenerator (9) verbundene Empfangseinrichtung (12) für die Aufwärtssignale, eine mit dem Regenerator (9) verbundene Sendeeinrichtung (13) für zu den Teilnehmerendgeräten (26) zu sendende Quittungssignale und Abwärtssignale, die an einem Anschluß (7), an den die Zweidrahtleitung (21) anschließbar ist, in die Rückkanaleinrichtung (4) eintreten können, und eine mit dem Regenerator (9) und der Zweidrahtleitung (21) verbundene Modulations- und Demodulationseinrichtung (27) vorhanden sind, und daß der Regenerator (9) Mittel (28, 29, 30, 31) hat, um die Aufwärtssignale gemäß dem Protokoll für den Mehrfachzugriff zu verarbeiten, so daß die Aufwärtssignale kollisionsfrei zur Zentrale (1) gesendet werden.

3. Übertragungssystem nach Anspruch 1, **dadurch gekennzeichnet, daß** in der Rückkanaleinrichtung (4) ein Regenerator (9), eine mit dem Regenerator (9) verbundene Empfangseinrichtung (12) für die Aufwärtssignale, eine mit dem Regenerator (9) verbundene Sendeeinrichtung (13) für zu den Teilnehmerendgeräten (26) zu sendende Quittungssignale und Abwärtssignale, die an einem Anschluß (7), an den die Zweidrahtleitung (21) anschließbar ist, in die Rückkanaleinrichtung (4) eintreten können, und ein mit dem Regenerator (9) und der Zweidrahtleitung (21) verbundener Netzabschluß für die ADSL-Technik vorhanden sind, und daß der Regenerator (9) Mittel (28, 29, 30, 31) hat, um die Aufwärtssignale gemäß dem Protokoll für den Mehrfachzugriff zu verarbeiten, so daß die Aufwärtssignale kollisionsfrei zur Zentrale (1) gesendet werden.

4. Übertragungssystem nach Anspruch 1, **dadurch gekennzeichnet, daß** in der Rückkanaleinrichtung (4) ein Regenerator (9), eine mit dem Regenerator (9) verbundene Empfangseinrichtung (12) für die Aufwärtssignale, eine mit dem Regenerator (9) verbundene Sendeeinrichtung (13) für zu den Teilnehmerendgeräten (26) zu sendende Quittungssignale und Abwärtssignale, die an einem Anschluß (7), an den die Zweidrahtleitung (21)
anschließbar ist, in die Rückkanaleinrichtung (4) eintreten können, und ein mit dem Regenerator (9) und der Zweidrahtleitung (21) verbundener Netzabschluß für die HDSL-Technik vorhanden sind, und daß der Regenerator (9) Mittel (28, 29, 30, 31) hat, um die Aufwärtssignale gemäß dem Protokoll für den Mehrfachzugriff zu verarbeiten, so daß die Aufwärtssignale kollisionsfrei zur Zentrale (1) gesendet werden.

5. Rückkanaleinrichtung für ein Übertragungssystem gemäß Anspruch 1, bei der ein Regenerator (9), eine mit dem Regenerator (9) verbundene Empfangseinrichtung (12) für Aufwärtssignale und eine mit dem Regenerator (9) verbundene Sendeeinrichtung (13) für zu Teilnehmerendgeräten (26) zu sendende Quittungssignale und Abwärtssignale, die an einem Anschluß (7), an den eine Zweidrahtleitung (21) anschließbar ist, in die Rückkanaleinrichtung (4) eintreten können, vorhanden sind, bei der entweder ein mit dem Regenerator (9) und dem Anschluß (7) verbundener Netzabschluß für die ADSL- oder die HDSL-Technik oder eine ebenfalls mit dem Regenerator (9) und dem Anschluß (7) verbundene Modulations- und Demodulationseinrichtung (27) vorhanden sind, und bei der der Regenerator (9) Mittel (28, 29, 30, 31) hat, um die Aufwärtssignale gemäß dem Protokoll für den Mehrfachzugriff zu verarbeiten, so daß die Aufwärtssignale kollisionsfrei an dem Anschluß (7) aus der Rückkanaleinrichtung (4) austreten.

6. Übertragungssystem nach einem der Ansprüche 2 bis 4, oder Rückkanaleinrichtung nach Anspruch 5, **dadurch gekennzeichnet, daß** die Sendeeinrichtung (13) und die Empfangseinrichtung (12) ein Unterträgermodulationsverfahren anwenden.

7. Übertragungssystem nach einem der Ansprüche 2 bis 4, oder Rückkanaleinrichtung nach Anspruch 5, **dadurch gekennzeichnet, daß** die Sendeeinrichtung (13) und die Empfangseinrichtung (12) jeweils mehrfach vorhanden sind.

8. Übertragungssystem nach einem der Ansprüche 2 bis 4, oder Rückkanaleinrichtung nach Anspruch 5, **dadurch gekennzeichnet, daß** im Regenerator (9) eine mit der Empfangseinrichtung (12) verbundene Kontrolleinrichtung (28), ein mit der Kontrolleinrichtung und der Modulations- oder Demodulationseinrichtung (27) oder einem Netzabschluß verbundener Quittungsgenerator (31) und eine mit dem Quittungsgenerator (31) und der Sendeeinrichtung (13) verbundene Rahmeneinrichtung (29) vorhanden sind, daß die Kontrolleinrichtung (28) das angewendete Protokoll kontrolliert, daß der Quittungsgenerator (31) Quittungssignale erzeugt und daß die Rahmeneinrichtung (29) die Quittungssignale und die Abwärtssignale in Rahmen einfügt, die dem angewendeten Protokoll entsprechen und von der Sendeeinrichtung (13) ausgesendet werden.

## Claims

1. A transmission system wherein a control centre (1) and a plurality of subscriber terminals (26) which are able to receive television and radio signals emitted by the control centre (1), or other signals to be distributed, and subscriber-specific signals and which are able to transmit uplink signals to the control centre (1) are linked to a wideband distribution network (2) and wherein the wideband distribution network (2) has a plurality of repeaters (10) near the subscribers, to which a group of subscriber terminals (26) is linked, in each instance by a connection-network section (11),
**characterised in that** a backward-channel device (4) which is linked to a two-wire line (21) which is directly or indirectly connected to the control centre (1) is connected in each instance to at least one repeater (10) near the, subscribers or to at least one connection-network section (11), **in that** the backward-channel device (4) receives the uplink signals transmitted by the subscriber terminals (26), and **in that** the backward-channel device (4) transmits the received uplink signals to the control centre (1) in accordance with a protocol that regulates multiple access of the subscriber terminals (26) to the two-wire line (21).

2. Transmission system according to Claim 1, **characterised in that** a regenerator (9), a receiving device (12) connected to the regenerator (9) for the uplink signals, a transmitting device (13) connected to the regenerator (9) for acknowledgement signals and downlink signals to be transmitted to the subscriber terminals (26), which are able to enter the backward-channel device (4) at a port (7) to which the two-wire line (21) is capable of being linked, and a modulation and demodulation device (27) connected to the regenerator (9) and to the two-wire line (21) are present in the backward-channel device (4), and **in that** the regenerator (9) has means (28, 29, 30, 31) in order to process the uplink signals in accordance with the protocol for multiple access, so that the uplink signals are transmitted to the control centre (1) in collision-free manner.

3. Transmission system according to Claim 1, **characterised in that** a regenerator (9), a receiving device (12) connected to the regenerator (9) for the uplink signals, a transmitting device (13) connected to the regenerator (9) for acknowledgement signals and downlink signals to be transmitted to the subscriber terminals (26), which are able to enter the backward-channel device (4) at a port (7) to which the two-wire line (21) is capable of being linked, and a network termination for ADSL technology which is connected to the regenerator (9) and to the two-wire line (21) are present in the backward-channel device (4), and **in that** the regenerator (9) has means (28, 29, 30, 31) in order to process the uplink signals in accordance with the protocol for multiple access, so that the uplink signals are transmitted to the control centre (1) in collision-free manner.

4. Transmission system according to Claim 1, **characterised in that** a regenerator (9), a receiving device (12) connected to the regenerator (9) for the uplink signals, a transmitting device (13) connected to the regenerator (9) for acknowledgement signals and downlink signals to be transmitted to the subscriber terminals (26), which are able to enter the backward-channel device (4) at a port (7) to which the two-wire line (21) is capable of being linked, and a network termination for HDSL technology which is connected to the regenerator (9) and to the two-wire line (21) are present in the backward-channel device (4), and **in that** the regenerator (9) has means (28, 29, 30, 31) in order to process the uplink signals in accordance with the protocol for multiple access, so that the uplink signals are transmitted to the control centre (1) in collision-free manner.

5. A backward-channel device for a transmission system according to Claim 1, wherein a regenerator (9), a receiving device (12) connected to the regenerator (9) for uplink signals and a transmitting device (13) connected to the regenerator (9) for acknowledgement signals and downlink signals to be transmitted to subscriber terminals (26), which are able to enter the backward-channel device (4) at a port (7) to which a two-wire line (21) is capable of being linked are present, wherein either a network termination for ADSL technology or for HDSL technology which is connected to the regenerator (9) and to the port (7) or a modulation and demodulation device (27) which is likewise connected to the regenerator (9) and to the port (7) are present, and wherein the regenerator (9) has means (28, 29, 30, 31) in order to process the uplink signals in accordance with the protocol for multiple access, so that the uplink signals emerge from the backward-channel device (4) in collision-free manner at the port (7).

6. Transmission system according to one of Claims 2 to 4, or backward-channel device according to Claim 5, **characterised in that** the transmitting device (13) and the receiving device (12) employ a subcarrier modulation method.

7. Transmission system according to one of Claims 2 to 4, or backward-channel device according to Claim 5, **characterised in that** the transmitting device (13) and the receiving device (12) are each present in multiple numbers.

8. Transmission system according to one of Claims 2 to 4, or backward-channel device according to Claim 5, **characterised in that** a checking device (28) connected to the receiving device (12), an acknowledgement-generator (31) connected to the checking device and to the modulation or demodulation device (27) or to a network termination and a frame device (29) connected to the acknowledgement-generator (31) and to the transmitting device (13) are present in the regenerator (9), **in that** the checking device (28) checks the protocol employed, **in that** the acknowledgement-generator (31) generates acknowledgement signals, and **in that** the frame device (29) inserts the acknowledgement signals and the downlink signals into frames that correspond to the protocol employed and that are emitted by the transmitting device (13).

## Revendications

1. Système de transmission, dans lequel un central (1) et une pluralité d'équipements terminaux utilisateurs (26), qui peuvent recevoir les signaux télévisuels et radio émis par le central (1) ou tout autre signal à émettre et des signaux utilisateurs individuels et qui peuvent émettre vers le central (1) des signaux montants, sont raccordés à un réseau de distribution à large bande (2), et dans lequel le réseau de distribution à large bande (2) dispose d'une pluralité d'amplificateurs (10) situés côté utilisateur et auxquels un groupe d'équipements terminaux utilisateurs (26) est raccordé au moyen d'un segment du réseau (11), **caractérisé en ce qu'**un moyen formant voie de retour (4), qui est connecté à une ligne bifilaire (21), laquelle est reliée directement ou indirectement avec le central (1), est à chaque fois relié avec au moins un amplificateur (10) situé côté utilisateur ou avec au moins un segment du réseau (11), que le moyen formant voie de retour (4) émet vers le central (1) les signaux montants reçus selon un protocole, qui régit l'accès multiple des équipements terminaux utilisateurs (26) à la ligne bifilaire (21).

2. Système de transmission selon la revendication 1, **caractérisé en ce qu'**un régénérateur (9), un dispositif de réception (12) pour les signaux montant relié au régénérateur (9), un dispositif d'émission (13)relié avec le régénérateur (9) pour les signaux d'accusé réception et les signaux descendants à émettre vers les équipements terminaux utilisateurs (26) lesquels dispositifs peuvent pénétrer au niveau d'une connexion (7), à laquelle est reliée une ligne bifilaire (21) dans le moyen formant voie de retour (4) et un dispositif de modulation et de démodulation (27) relié avec le régénérateur (9) et la ligne bifilaire (21), existent dans le moyen formant voie de retour (4), et que le régénérateur (9) dispose de moyens (28, 29, 30, 31), pour traiter les signaux montants selon le protocole pour les accès multiples, de telle sorte que les signaux montants soient émis vers le central (1) sans risque de collision.

3. Système de transmission selon la revendication 1, **caractérisé en ce qu'**un régénérateur (9), un dispositif de réception (12) pour les signaux montant relié au régénérateur (9), un dispositif d'émission (13)relié avec le régénérateur (9) pour les signaux d'accusé réception et les signaux descendants à émettre vers les équipements terminaux utilisateurs (26) lesquels dispositifs peuvent pénétrer au niveau d'une connexion (7), à laquelle est reliée une ligne bifilaire (21) dans le moyen formant voie de retour (4) et une connexion réseau pour la technologie ADSL, reliée avec le régénérateur (9) et la ligne bifilaire (21), existent dans le moyen formant voie de retour (4), et que le régénérateur (9) dispose de moyens (28, 29, 30, 31), pour traiter les signaux montants selon le protocole pour les accès multiples, de telle sorte que les signaux montants soient émis vers le central (1) sans risque de collision.

4. Système de transmission selon la revendication 1, **caractérisé en ce qu'**un régénérateur (9), un dispositif de réception (12) pour les signaux montant relié au régénérateur (9), un dispositif d'émission (13)relié avec le régénérateur (9) pour les signaux d'accusé réception et les signaux descendants à émettre vers les équipements terminaux utilisateurs (26) lesquels dispositifs peuvent pénétrer au niveau d'une connexion (7), à laquelle est reliée une ligne bifilaire (21) dans le moyen formant voie de retour (4) et une connexion réseau pour la technologie HDSL, reliée avec le régénérateur (9) et la ligne bifilaire (21), existent dans le moyen formant voie de retour (4), et que le régénérateur (9) dispose de moyens (28, 29, 30, 31), pour traiter les signaux montants selon le protocole pour les accès multiples, de telle sorte que les signaux montants soient émis vers le central (1) sans risque de collision.

5. Moyen formant voie de retour pour un système de transmission selon la revendication 1, dans lequel un régénérateur (9), un dispositif de réception (12) relié avec le régénérateur (9) pour les signaux montants et un dispositif d'émission (13) relié avec le régénérateur (9) pour l'émission des signaux d'accusé réception et des signaux descendants vers les équipements terminaux utilisateurs existent, lesquels dispositifs peuvent pénétrer au niveau d'une connexion (7), à laquelle est reliée une ligne bifilaire (21) dans le moyen formant voie de retour (4), dans lequel soit une connexion réseau pour la technologie ADSL ou HDSL, reliée avec le régénérateur (9) et la connexion (7), soit un dispositif de modulation et de démodulation (27), également relié avec le régénérateur (9) et la connexion (7) existent, dans lequel le régénérateur (9) dispose de moyens (28, 29, 30, 31), pour traiter les signaux montants selon le protocole pour les accès multiples, de telle sorte que les signaux montants sortent du moyen formant voie de retour (4) au niveau de la connexion (7) sans risque de collision.

6. Système de transmission selon l'une quelconque des revendications 2 à 4 ou moyen formant voie de retour, selon la revendication 5 **caractérisé en ce que** le dispositif d'émission (13) et le dispositif de réception (12) utilisent un procédé de modulation de la sous-porteuse.

7. Système de transmission selon l'une quelconque des revendications 2 à 4 ou moyen formant voie de retour, selon la revendication 5 **caractérisé en ce que** le dispositif d'émission (13) et le dispositif de réception (12) peuvent être présents plusieurs fois.

8. Système de transmission selon l'une quelconque des revendications 2 à 4 ou moyen formant voie de retour, selon la revendication 5 **caractérisé en ce qu'**un dispositif de contrôle (28) relié avec le dispositif de réception (12), un générateur d'accusé réception (31), relié avec le dispositif de contrôle et le dispositif de modulation et de démodulation (27) ou avec une connexion réseau et un dispositif de répartition (29) relié avec le générateur d'accusé réception (31) et le dispositif d'émission (13) se trouvent dans le régénérateur (9), que le dispositif de contrôle (28) contrôle le protocole utilisé, que le générateur d'accusés réception (31) génère des signaux d'accusé de réception et que le dispositif de répartition (29) insère les signaux d'accusé réception et les signaux descendants dans des cadres, qui correspondent au protocole utilisé et qui sont émis par le dispositif d'émission (13).
